# EUROPÄISCHE PATENTANMELDUNG

(11) **EP 3 476 640 A1**
(43) Veröffentlichungstag der Anmeldung: **01.05.2019**
(21) Anmeldenummer: 18201136.1
(22) Anmeldetag: 18.10.2018
(51) Int. Cl.: B60K 11/08

(54) **EINRICHTUNG FÜR EINEN FRONTSTOSSFÄNGER EINES KRAFTFAHRZEUGS**

(30) Priorität: 27.10.2017 DE 202017106531 U
(71) Anmelder: REHAU AG + Co, 95111 Rehau (DE)
(72) Erfinder: Müller, Claus, 95028 Hof (DE); Löffler, Andreas, 95111 Rehau (DE); Yildirim, Mustafa, 95028 Hof (DE); Witzelsperger, Xaver, 84152 Mengkofen (DE)

(57) **Zusammenfassung**

Die Erfindung betrifft eine Einrichtung (10) für einen Frontstoßfänger (12) eines Kraftfahrzeugs umfassend einen Kühlergrill (14) und einen Drehantrieb 40) mit Führungen (46, 54) zum Betätigen von Klappenelementen (24, 26) des Kühlergrills(14).

## Beschreibung

### Hintergrund der Erfindung

Die vorliegende Erfindung betrifft eine Einrichtung für einen Frontstoßfänger eines Kraftfahrzeugs.

Es ist bekannt bei Kraftfahrzeugen einen Kühlergrill vorzusehen, der mit Luftdurchtrittsöffnungen versehen ist, die durch Klappen verschließbar sind. Bei diesen bekannten Lösungen ist meist jede der verschließbaren Luftdurchtrittsöffnungen einem bestimmten Bereich des Kraftfahrzeugs, wie z.B. einem Radlauf oder Bremsscheiben zugeordnet, welcher über diese Luftdurchtrittsöffnung zu kühlen ist. Es ist aus der WO 2010/034489 bekannt, nicht nur alle der vorgesehen Klappen in den geöffneten oder in den geschlossenen Zustand zu überführen, sondern die Klappen auch einzeln anzusteuern, so dass lediglich nur eine oder mehrere, jedoch nicht alle der Luftdurchtrittsöffnungen zwecks Kühlung für eine Durchströmung mit Fahrtwind freigegeben werden. Durch die Möglichkeit, die Klappen bzw. Klappenelemente einzeln anzusteuern, können momentan für die Kühlung nicht benötige Klappen - z.B. weil momentan eine Kühlung der Bremsscheiben nicht erforderlich ist - geschlossen bleiben, was vorteilhaft den Widerstandsbeiwert senkt. Allerdings sind zur Realisierung einer von den übrigen Klappen entkoppelten Ansteuerungsmöglichkeit einzelner Klappen aufwendig mehrere Antriebe vorzusehen, über welche die jeweiligen Klappen individuell zwischen der Schließstellung und der Öffnungsstellung verschwenkbar sind. Dies ist insbesondere der Fall, wenn einige der Drehachsen bzw. Schwenkachsen - um welche die Klappen schwenkbar bzw. drehbar sind - sich schneiden oder windschief zueinander angeordnet sind, was je nach Bauart der Fall sein kann.

Weitere Kühlgitteranordnungen sind z.B. aus der EP 1074419 A2 oder der DE 10 2011 103 585 A1 bekannt.

### Zugrundeliegende Aufgabe

Der vorliegenden Erfindung liegt daher die Aufgabe zugrunde, bei einem Kühlergrill ein Öffnen oder Schließen wenigstens einer Luftdurchtrittsöffnung unter Beibehaltung des geschlossenen oder geöffneten Zustands von wenigstens einer weiteren Luftdurchtrittsöffnung mit nur einem Antrieb technisch zu realisieren.

### Erfindunasaemäße Lösung

Diese Aufgabe wird erfindungsgemäß mit einer Einrichtung mit den Merkmalen des Anspruchs 1 gelöst.

Die erfindungsgemäße Einrichtung für einen Frontstoßfänger eines Kraftfahrzeugs bzw. die erfindungsgemäße Kühlergitteranordnung für einen Frontstoßfänger eines Kraftfahrzeugs umfasst
- einen Kühlergrill mit wenigstens zwei Luftdurchtrittsöffnungen, der für die Aufnahme in einer Kühlergrill-Aufnahme des Frontstoßfängers vorgesehen ist,
- wenigstens ein erstes Klappenelement und wenigstens ein zweites Klappenelement, wobei jede Luftdurchtrittsöffnung von jeweils einem der Klappenelemente verschließbar ist,
- wobei jedes Klappenelement wenigstens eine an dem Kühlergrill drehbar gelagerte Welle aufweist, so dass das Klappenelement bzw. das jeweilige Klappenelement durch Verdrehen der Welle verschwenkbar ist, wobei jedes Klappenelement durch Verdrehen der Welle bzw. durch Verdrehen seiner Welle zwischen einer Schließstellung, in welcher das Klappenelement - bzw. das jeweilige Klappenelement - die Luftdurchtrittsöffnung verschließt, und einer den Luftdurchtritt durch die Luftdurchtrittsöffnung - bzw. durch die jeweilige Luftdurchtrittsöffnung- freigebende Öffnungsstellung verschwenkbar ist,
- wobei die Drehachse der Welle des ersten Klappenelements die Drehachse der Welle zweiten Klappenelements unter einem Winkel schneidet oder windschief zu dieser angeordnet ist,
- wobei ein erstes und ein zweites längliches Betätigungselement vorgesehen sind, die jeweils zwischen einer Schließposition und einer Öffnungsposition längsbeweglich an dem Kühlergrill angeordnet sind,
- wobei wenigstens eine erste Vorrichtung zum Umsetzen einer Längsbewegung des ersten Betätigungselements in eine Drehbewegung der Welle des ersten Klappenelements vorgesehen ist, so dass das erste Klappenelement durch Bewegen des ersten Betätigungselements zwischen der Schließposition und der Öffnungsposition zwischen der Schließstellung und der Öffnungsstellung verschwenkbar ist,
- wobei wenigstens eine zweite Vorrichtung zum Umsetzen einer Längsbewegung des zweiten Betätigungselements in eine Drehbewegung der Welle des zweiten Klappenelements vorgesehen ist, so dass das zweite Klappenelement durch Bewegen des zweiten Betätigungselements zwischen der Schließposition und der Öffnungsposition zwischen der Schließstellung und der Öffnungsstellung verschwenkbar ist,
- wenigstens einen Drehantrieb zum Bewegen jedes der Betätigungselemente zwischen der Schließposition und der Öffnungsposition, wobei der Drehantrieb einen mit einer Drehantriebswelle des Drehantriebs drehfest verbundenen Körper aufweist bzw. wobei der Drehantrieb einen mit einer Drehantriebswelle des Drehantriebs drehfest verbundenen Grundkörper aufweist,
- wobei der Grundkörper wenigstens eine erste Führung aufweist, in welcher ein an dem ersten Betätigungselement angebrachtes erstes Führungselement aufgenommen ist bzw. geführt ist, wobei die erste Führung eine von einer ersten Drehstellung der Drehantriebswelle ausgehende erste Drehung der Drehantriebswelle in eine zweite Drehstellung in eine Bewegung des ersten Betätigungselements von der Schließposition in die Öffnungsposition umsetzt,
- wobei der Grundkörper wenigstens eine zweite Führung aufweist, in welcher ein an dem zweiten Betätigungselement angebrachtes zweites Führungselement aufgenommen ist bzw. geführt ist, wobei die zweite Führung eine von der zweiten Drehstellung ausgehende zweite Drehung der Drehantriebswelle, deren Drehsinn bzw. deren Drehrichtung dem Drehsinn der ersten Drehung entspricht, in eine dritte Drehstellung in eine Bewegung des zweiten Betätigungselements von der Schließposition in die Öffnungsposition umsetzt.

Bei der erfindungsgemäßen Einrichtung für einen Frontstoßfänger eines Kraftfahrzeugs, die einen Kühlergrill mit wenigstens zwei Luftdurchtrittsöffnungen aufweist und welche für die Aufnahme in einer Kühlergrill-Aufnahme des Frontstoßfängers vorgesehen ist, kann vorteilhaft durch Vorsehen der länglichen Betätigungselemente in Verbindung mit den Vorrichtungen zum Umsetzen einer Längsbewegung des jeweiligen Betätigungselements in eine Drehbewegung der Welle des jeweiligen Klappenelements und in Verbindung mit den Führungen des Grundkörpers das erste oder das zweite Klappenelement von der Schließstellung in die Öffnungsstellung verschwenkt werden kann ohne dass eine Verschwenkung des zweiten oder ersten Klappenelements erfolgt bzw. das erste oder das zweite Klappenelement kann unter Beibehaltung der Schließstellung des zweiten oder ersten Klappenelements in die Öffnungsstellung verschwenkt werden. Die erfindungsgemäße Einrichtung zeichnet sich hierbei insbesondere dadurch aus, dass diese individuelle Verschwenkungsmöglichkeit des ersten bzw. zweiten Klappenelements - bzw. die von dem jeweils anderen Klappenelement bzw. den jeweils anderen Klappenelementen entkoppelte Verschwenkungsmöglichkeit - lediglich mit einem Drehantrieb bzw. mit lediglich einem einzigen Drehantrieb realisiert werden kann, welcher den Grundkörper mit der ersten und zweiten Führung aufweist und bei dem eine Drehantriebswelle des Drehantriebs drehfest mit dem Grundkörper verbunden ist. So ist zum Verschenken des ersten Klappenelements von der Schließstellung in die Öffnungsstellung lediglich der Drehantrieb derart anzusteuern bzw. zu betreiben, dass die Drehantriebswelle von der ersten Drehstellung in die zweite Drehstellung gedreht wird, wodurch das erste Betätigungselement über die erste Führung und das erste Führungselement entlang seiner Längsachse bzw. im wesentlichen entlang seiner Längsachse von der Schließposition in die Öffnungsposition bewegt wird. Diese Längsbewegung wiederum wird über die erste Vorrichtung zum Umsetzen einer Längsbewegung des ersten Betätigungselements in eine Drehbewegung der Welle des ersten Klappenelements in eine Schwenkbewegung des ersten Klappenelements von der Schließstellung in die Öffnungsstellung umgesetzt. Analog kann das zweite Klappenelement von der Schließstellung in die Öffnungsstellung verschwenkt werden durch die von der zweiten Drehstellung ausgehende zweite Drehung der Drehantriebswelle in die dritte Drehstellung, wobei der Drehsinn der zweiten Drehung dem Drehsinn der ersten Drehung entspricht.

Es versteht sich, dass das erste Klappelement durch Zurückdrehen der Drehantriebswelle von der zweiten Drehstellung in die erste Drehstellung von der Öffnungsstellung in die Schließstellung verschwenkt werden kann bzw. zurückverschwenkt werden kann. Es versteht sich auch, dass das zweite Klappelement durch Zurückdrehen der Drehantriebswelle von der dritten Drehstellung in die zweite Drehstellung von der Öffnungsstellung in die Schließstellung verschwenkt werden kann bzw. zurückverschwenkt werden kann.

Insgesamt betrachtet kann bei dem Kühlergrill der erfindungsgemäßen Einrichtung vorteilhaft ein Öffnen oder Schließen wenigstens einer Luftdurchtrittsöffnung unter Beibehaltung des geschlossenen oder geöffneten Zustands von wenigstens einer weiteren Luftdurchtrittsöffnung mit nur einem Drehantrieb technisch realisiert werden. Durch Vorsehen nur eines Drehantriebs kann vorteilhaft ein kompakter, platzsparender und gewichtsreduzierender Aufbau realisiert werden.

Der Kühlergrill mit den wenigstens zwei Luftdurchtrittsöffnungen ist für die Aufnahme in einer Kühlergrill-Aufnahme des Frontstoßfängers vorgesehen, wobei der Kühlergrill der erfindungsgemäßen Einrichtung während des Zusammenbaus des Kraftfahrzeugs hierfür z.B. insbesondere in die Aufnahme eingesetzt werden kann und hiernach mit dieser z.B. verbunden werden kann.

Jede Luftdurchtrittsöffnung ist von jeweils einem der Klappenelemente verschließbar bzw. im wesentlichen verschließbar. Es versteht sich, dass hier unter der Verschließbarkeit der jeweiligen Luftdurchtrittsöffnung selbstverständlich nicht zwingend ausschließlich ein Zustand zu verstehen ist, bei dem eine Luftdurchströmung durch die Luftdurchtrittsöffnung vollständig ausgeschlossen ist, sondern in der Regel ein Zustand, bei dem die jeweilige Luftdurchtrittsöffnung abgesehen von konstruktiv bzw. baulich bedingten Leckageströmungen von dem jeweiligen Klappenelement im wesentlichen von einer Luftdurchströmung mit Fahrtwind bewahrt wird.

Jedes Klappenelement weist wenigstens eine an dem Kühlergrill drehbar gelagerte Welle auf bzw. wenigstens eine an dem Kühlergrill drehbar angebrachte Welle auf bzw. jedes Klappenelement weist wenigstens eine an dem Kühlergrill drehbar gelagerte Achse auf, so dass das Klappenelement durch Verdrehen der Welle bzw. Achse verschwenkbar ist, wobei jedes Klappenelement durch Verdrehen der Welle zwischen einer Schließstellung, in welcher das Klappenelement die Luftdurchtrittsöffnung verschließt, und einer den Luftdurchtritt durch die Luftdurchtrittsöffnung freigebende Öffnungsstellung, verschwenkbar ist. Bei der Welle handelt es sich bekannterweise um ein Element, insbesondere z.B. um ein stabförmiges Element zum Weiterleiten von Drehbewegungen bzw. Drehmomenten, wobei hier die Welle eine auf diese von der ersten bzw. zweiten Vorrichtung -also die jeweilige Vorrichtung zum Umsetzen einer Längsbewegung des ersten bzw. zweiten Betätigungselements in eine Drehbewegung der Welle des ersten bzw. zweiten Klappenelements - übertragenes Drehmoment (bzw. eine auf diese von der ersten bzw. zweiten Vorrichtung übertragene Drehbewegung) auf das jeweilige Klappenelement überträgt bzw. an dieses weiterleitet.

Die Drehachse der Welle des ersten Klappenelements schneidet die Drehachse der Welle zweiten Klappenelements unter einem Winkel oder ist windschief zu dieser angeordnet. Eine derartige von einer parallelen Ausrichtung der Drehachsen der Klappenelemente zueinander abweichende Anordnung der Drehachsen der Klappenelemente zueinander ist erforderlich, um mittels des Drehantriebs vorteilhaft ein Öffnen oder Schließen wenigstens einer Luftdurchtrittsöffnung mittels des Drehantriebs unter Beibehaltung des geschlossenen oder geöffneten Zustands der weiteren Luftdurchtrittsöffnung insbesondere durch geeignete Ausbildung der ersten und der zweiten Führung zu realisieren. Bei einer bevorzugten Ausführungsform schneidet die Drehachse der Welle des ersten Klappenelements die Drehachse der Welle des zweiten Klappenelements unter einem Winkel von 90 Grad bzw. unter einem Winkel zwischen 85 Grad und 95 Grad.

Erfindungsgemäß sind ein erstes und ein zweites längliches Betätigungselement vorgesehen, die jeweils zwischen einer Schließposition und einer Öffnungsposition längsbeweglich an dem Kühlergrill angeordnet sind. Die Betätigungselemente können z.B. in Form einer Stange bzw. in Form einer Betätigungsstange ausgebildet sein. Das erste bzw. das zweite Betätigungselement ist längsbeweglich an dem Kühlergrill angeordnet. Dies kann in jeder dem Fachmann bekannten Weise realisiert sein. Insbesondere kann das jeweilige Betätigungselement hierfür entlang seiner Längsrichtung verschiebbar an dem Kühlergrill gehalten sein bzw. entlang seiner Längsrichtung relativ zu dem Kühlergrill geradlinig verschiebbar an dem Kühlergrill gehalten sein.

Erfindungsgemäß ist wenigstens eine erste Vorrichtung zum Umsetzen einer Längsbewegung des ersten Betätigungselements in eine Drehbewegung der Welle des ersten Klappenelements vorgesehen, so dass das erste Klappenelement durch Bewegen des Betätigungselements zwischen der Schließposition und der Öffnungsposition zwischen der Schließstellung und der Öffnungsstellung verschwenkbar ist. Ferner ist erfindungsgemäß wenigstens eine zweite Vorrichtung zum Umsetzen einer Längsbewegung des zweiten Betätigungselements in eine Drehbewegung der Welle des zweiten Klappenelements vorgesehen, so dass das zweite Klappenelement durch Bewegen des Betätigungselements zwischen der Schließposition und der Öffnungsposition zwischen der Schließstellung und der Öffnungsstellung verschwenkbar ist. Bei diesen Vorrichtungen kann es sich um dem Fachmann bekannte Vorrichtungen zur Umsetzung der Längsbewegung des jeweiligen Betätigungselements in die Drehbewegung bzw. Drehung der jeweiligen Welle des jeweiligen Klappenelements handeln. Über die erste bzw. zweite Vorrichtung ist eine mechanische Wirkverbindung hergestellt, über welche die Umsetzung der jeweiligen Längsbewegung des Betätigungselements in die Drehbewegung der jeweiligen Welle erfolgt.

Bei einer besonders bevorzugten Ausführungsform der erfindungsgemäßen Einrichtung umfasst die erste Vorrichtung zum Umsetzen der Längsbewegung des ersten Betätigungselements in eine Drehbewegung der Welle des ersten Klappenelements ein an der Welle angebrachtes Exzenterelement und ein an dem ersten Betätigungselement angebrachtes Element zum Verschwenken des Exzenterelements durch Bewegen des ersten Betätigungselements zwischen der Schließposition und der Öffnungsposition. Das Exzenterelement kann insbesondere drehfest mit der Welle verbunden sein und das Element kann mit dem ersten Betätigungselement verbunden sein bzw. fest verbunden sein. Insbesondere kann das Exzenterelement einstückig mit der Welle ausgebildet sein und das Element kann einstückig mit dem ersten Betätigungselement ausgebildet sein.

Bei einer weiteren besonders bevorzugten Ausführungsform der erfindungsgemäßen Einrichtung umfasst die zweite Vorrichtung zum Umsetzen der Längsbewegung des zweiten Betätigungselements in eine Drehbewegung der Welle des zweiten Klappenelements ein an der Welle angebrachtes Exzenterelement und ein an dem zweiten Betätigungselement angebrachtes Element zum Verschwenken des Exzenterelements durch Bewegen des zweiten Betätigungselement zwischen der Schließposition und der Öffnungsposition. Auch bei dieser weiteren besonders bevorzugten Ausführungsform kann das Exzenterelement insbesondere drehfest mit der Welle verbunden sein und das Element kann mit dem zweiten Betätigungselement verbunden sein bzw. fest verbunden sein. Insbesondere kann das Exzenterelement einstückig mit der Welle ausgebildet sein und das Element kann einstückig mit dem zweiten Betätigungselement ausgebildet sein.

Ferner können bei einer praktischen Ausführungsform der erfindungsgemäßen Einrichtung die beiden obigen Ausführungsformen kombiniert sein, so dass bei dieser praktischen Ausführungsform die erste Vorrichtung zum Umsetzen der Längsbewegung des ersten Betätigungselements in eine Drehbewegung der Welle des ersten Klappenelements ein an der Welle angebrachtes erstes Exzenterelement und ein an dem ersten Betätigungselement angebrachtes erstes Element zum Verschwenken des ersten Exzenterelements durch Bewegen des ersten Betätigungselement zwischen der Schließposition und der Öffnungsposition umfasst und die zweite Vorrichtung zum Umsetzen der Längsbewegung des zweiten Betätigungselements in eine Drehbewegung der Welle des zweiten Klappenelements ein an der Welle angebrachtes zweites Exzenterelement und ein an dem zweiten Betätigungselement angebrachtes zweites Element zum Verschwenken des zweiten Exzenterelements durch Bewegen des zweiten Betätigungselement zwischen der Schließposition und der Öffnungsposition umfasst. Bei dieser praktischen Ausführungsform kann das erste Exzenterelement drehfest mit der Welle verbunden sein, das erste Element kann mit dem ersten Betätigungselement verbunden sein bzw. fest verbunden sein, das zweite Exzenterelement kann drehfest mit der Welle verbunden sein und das zweite Element kann mit dem zweiten Betätigungselement verbunden sein bzw. fest verbunden sein. Insbesondere kann bei dieser praktischen Ausführungsform das erste Exzenterelement einstückig mit der Welle ausgebildet sein, das erste Element kann einstückig mit dem ersten Betätigungselement ausgebildet sein, das zweite Exzenterelement kann einstückig mit der Welle ausgebildet sein und das zweite Element kann einstückig mit dem zweiten Betätigungselement ausgebildet sein.

Bei einer alternativen Ausführungsform der erfindungsgemäßen Einrichtung kann die erste und/oder die zweite Vorrichtung zum Umsetzen der Längsbewegung des ersten und/oder Betätigungselements in eine Drehbewegung der Welle des ersten und/oder zweiten Klappenelements ein mit der Welle des ersten und/oder zweiten Klappenelements drehfest verbundenes Zahnrad und eine an dem ersten und/oder zweiten Betätigungselement vorgesehene Zahnstange umfassen, welche eine Längsbewegung des Betätigungselements in eine Drehung des Zahnrads umsetzt, welches hierfür eine mechanische Wirkverbindung zu der Zahnstange aufweist bzw. welches hierfür mit wenigstens einem Zahn in einer Zahnlücke der Zahnstange aufgenommen ist.

Der Drehantrieb zum Bewegen jedes der Betätigungselemente zwischen der Schließposition und der Öffnungsposition kann insbesondere einen Elektromotor aufweisen. Bei dieser Ausführungsform ist die Drehantriebswelle des Drehantriebs mit der Antriebswelle des Elektromotors identisch und die Antriebswelle ist drehfest mit dem Grundkörper verbunden.

Bei dem Grundkörper (bzw. bei dem Körper) mit der wenigstens einen ersten Führung und der wenigstens einen zweiten Führung kann es sich z.B. um einen Grundkörper bzw. Körper aus einem Kunststoffmaterial handeln. Der Grundkörper kann insbesondere mehrteilig sein bzw. der Grundkörper kann insbesondere ein aus mehreren Teilen zusammengesetzter Körper sein, wobei die Teile z.B. durch Verbindungsmittel miteinander verbunden sein können und/oder miteinander verklebt sein können.

In der ersten Führung des Grundkörpers ist ein an dem ersten Betätigungselement angebrachtes erstes Führungselement aufgenommen bzw. geführt und die erste Führung setzt eine von einer ersten Drehstellung der Drehantriebswelle ausgehende erste Drehung der Drehantriebswelle in eine zweite Drehstellung in eine Bewegung des ersten Betätigungselements von der Schließposition in die Öffnungsposition um. Es handelt sich als bei der ersten Führung um eine Führung zur Umsetzung einer Drehbewegung der Drehantriebswelle in eine Längsbewegung bzw. geradlinige Bewegung des ersten Führungselements, die mit einer Längsbewegung des ersten Betätigungselements von der Schließposition in die Öffnungsposition einhergeht. Bei dem ersten Führungselement kann es insbesondere um ein mit dem ersten Betätigungselement einstückig ausgebildetes Führungselement handeln. Entsprechend kann es sich bei dem zweiten Führungselement insbesondere um ein mit dem zweiten Betätigungselement einstückig ausgebildetes Führungselement handeln. Insbesondere kann das erste Führungselement mit dem ersten Betätigungselement fest verbunden sein. Insbesondere kann auch zweite Führungselement mit dem zweiten Betätigungselement fest verbunden sein.

Die erste Führung kann insbesondere in Form einer an dem Grundkörper ausgebildeten Nut oder in Form einen an dem Grundkörper ausgebildeten Aussparung ausgebildet sein, wobei die Nut bzw. die Aussparung von wenigstens einer Innenfläche begrenzt ist, über welche bei Drehung des Grundkörpers eine die geradlinige Bewegung des ersten Führungselements bewirkende Kraft von dem Grundkörper auf das erste Führungselement ausgeübt wird, die mit einer Längsbewegung des ersten Betätigungselements von der Schließposition in die Öffnungsposition einhergeht. Insofern ist erste Führung dazu ausgebildet eine von der ersten Drehstellung der Drehantriebswelle ausgehende erste Drehung der Drehantriebswelle in die zweite Drehstellung in eine Bewegung des ersten Betätigungselements von der Schließposition in die Öffnungsposition umzusetzen bzw. insofern weist die erste Führung einen Verlauf bzw. eine Ausbildung auf, mit welchem bzw. mit welcher eine von der ersten Drehstellung der Drehantriebswelle ausgehende erste Drehung der Drehantriebswelle in die zweite Drehstellung in eine Bewegung des ersten Betätigungselements von der Schließposition in die Öffnungsposition umsetzbar ist.

Auch die zweite Führung kann insbesondere in Form einer an dem Grundkörper ausgebildeten Nut oder in Form einen an dem Grundkörper ausgebildeten Aussparung ausgebildet sein, wobei die Nut bzw. die Aussparung von wenigstens einer Innenfläche begrenzt ist, über welche bei Drehung des Grundkörpers eine die geradlinige Bewegung des zweiten Führungselements bewirkende Kraft von dem Grundkörper auf das zweite Führungselement ausgeübt wird, die mit einer Längsbewegung des zweiten Betätigungselements von der Schließposition in die Öffnungsposition einhergeht. Insofern ist die zweite Führung dazu ausgebildet eine von der zweiten Drehstellung ausgehende zweite Drehung der Drehantriebswelle, deren Drehsinn dem Drehsinn der ersten Drehung entspricht, in eine dritte Drehstellung in eine Bewegung des zweiten Betätigungselements von der Schließposition in die Öffnungsposition umzusetzen bzw. insofern weist die zweite Führung einen Verlauf bzw. eine Ausbildung auf, mit welchem bzw. mit welcher eine von der zweiten Drehstellung ausgehende zweite Drehung der Drehantriebswelle, deren Drehsinn dem Drehsinn der ersten Drehung entspricht, in eine dritte Drehstellung in eine Bewegung des zweiten Betätigungselements von der Schließposition in die Öffnungsposition umsetzbar ist.

Insbesondere kann die erste Führung eine erste Vertiefung des Grundkörpers und eine zu der ersten Vertiefung deckungsgleiche erste Aussparung des Grundkörpers umfassen bzw. aus dieser ersten Vertiefung und dieser ersten Aussparung gebildet sein, wobei das erste Führungselement mit einem Bereich in der ersten Vertiefung und mit einem anderen Bereich in der ersten Aussparrung aufgenommen ist. Insbesondere kann hierbei die erste Vertiefung von der ersten Aussparung beabstandet sein. Zusätzlich hierzu kann die zweite Führung eine zweite Vertiefung des Grundkörpers und eine zu der zweiten Vertiefung deckungsgleiche zweite Aussparung des Grundkörpers umfassen bzw. aus dieser zweiten Vertiefung und dieser zweiten Aussparung gebildet sein, wobei das zweite Führungselement mit einem Bereich in der zweiten Vertiefung und mit einem anderen Bereich in der zweiten Aussparrung aufgenommen ist. Insbesondere kann hierbei die zweite Vertiefung von der zweiten Aussparung beabstandet sein.

Erfindungsgemäß sind ein erstes und ein zweites längliches Betätigungselement vorgesehen, die jeweils zwischen einer Schließposition und einer Öffnungsposition längsbeweglich an dem Kühlergrill angeordnet sind, so dass also das erste längliche Betätigungselement von der Schließposition in die Öffnungsposition geradlinig bewegbar ist und von der Öffnungsposition in die Schließposition geradlinig bewegbar ist, und dass das zweite längliche Betätigungselement von der Schließposition in die Öffnungsposition geradlinig bewegbar ist und von der Öffnungsposition in die Schließposition geradlinig bewegbar ist.

Erfindungsgemäß ist jedes Klappenelement durch Verdrehen der Welle zwischen einer Schließstellung, in welcher das Klappenelement die Luftdurchtrittsöffnung verschließt, und einer den Luftdurchtritt durch die Luftdurchtrittsöffnung freigebende Öffnungsstellung, verschwenkbar ist, so dass also jedes Klappenelement durch Verdrehen der Welle von der Schließstellung in die Öffnungsstellung und durch Verdrehen der Welle (in einer entgegengesetzten Drehrichtung) von der Öffnungsstellung in die Schließstellung verschwenkbar ist.

Bei einer weiteren praktischen Ausführungsform der erfindungsgemäßen Einrichtung setzt die zweite Führung eine von der ersten Drehstellung der Drehantriebswelle ausgehende dritte Drehung der Drehantriebswelle, deren Drehsinn bzw. Drehrichtung dem Drehsinn der ersten Drehung entgegengesetzt ist, in eine vierte Drehstellung in eine Bewegung des zweiten Betätigungselements von der Schließposition in die Öffnungsposition um, und die erste Führung setzt eine von der vierten Drehstellung der Drehantriebswelle ausgehende vierte Drehung der Drehantriebswelle, deren Drehsinn, dem Drehsinn der dritten Drehung entspricht, in eine fünfte Drehstellung in eine Bewegung des ersten Betätigungselements von der Schließposition in die Öffnungsposition um. Oder in anderen Worten: Bei dieser weiteren praktischen Ausführungsform ist die zweite Führung dazu ausgebildet, eine von der ersten Drehstellung der Drehantriebswelle ausgehende dritte Drehung der Drehantriebswelle, deren Drehsinn bzw. Drehrichtung dem Drehsinn der ersten Drehung entgegengesetzt ist, in eine vierte Drehstellung in eine Bewegung des zweiten Betätigungselements von der Schließposition in die Öffnungsposition umzusetzen und die erste Führung ist dazu ausgebildet, eine von der vierten Drehstellung der Drehantriebswelle ausgehende vierte Drehung der Drehantriebswelle, deren Drehsinn, dem Drehsinn der dritten Drehung entspricht, in eine fünfte Drehstellung in eine Bewegung des ersten Betätigungselements von der Schließposition in die Öffnungsposition umzusetzen. Mit dieser weiteren praktischen Ausführungsform wird vorteilhaft auch eine Situation ermöglicht, bei welcher sich lediglich das zweite Klappenelement in der Öffnungsstellung befindet und bei welcher sich das erste Kappenelement in der Schließstellung befindet.

insofern weist also bei dieser weiteren praktischen Ausführungsform die zweite Führung einen Verlauf bzw. eine Ausbildung auf, mit welchem bzw. mit welcher eine von der ersten Drehstellung der Drehantriebswelle ausgehende dritte Drehung der Drehantriebswelle, deren Drehsinn bzw. Drehrichtung dem Drehsinn der ersten Drehung entgegengesetzt ist, in eine vierte Drehstellung in eine Bewegung des zweiten Betätigungselements von der Schließposition in die Öffnungsposition umsetzbar ist und die erste Führung weist bei dieser weiteren praktischen Ausführungsform einen Verlauf bzw. eine Ausbildung auf, mit welchem bzw. mit welcher eine von der vierten Drehstellung der Drehantriebswelle ausgehende vierte Drehung der Drehantriebswelle, deren Drehsinn, dem Drehsinn der dritten Drehung entspricht, in eine fünfte Drehstellung in eine Bewegung des ersten Betätigungselements von der Schließposition in die Öffnungsposition umsetzbar ist.

Mit der obigen weiteren praktischen Ausführungsform wird vorteilhaft auch eine Situation ermöglicht, bei welcher sich lediglich das zweite Klappenelement in der Öffnungsstellung befindet und bei welcher sich das erste Kappenelement in der Schließstellung befindet. Bei einer bevorzugten Ausführungsform der erfindungsgemäßen Einrichtung sind zwei erste Klappenelemente und ein zweites Klappenelement vorgesehen. Die ersten Klappenelemente können hierbei insbesondere Klappenelemente sein, die zur Steuerung der Fahrtwindkühlung von Radläufen oder Ladeluftkühlern des Kraftfahrzeugs vorgesehen sind. Das zweite Klappenelement kann hierbei insbesondere ein Klappenelement sein, das zur Steuerung der Fahrtwindkühlung von Bremsscheiben des Kraftfahrzeugs vorgesehen ist. Bei dieser bevorzugten Ausführungsform sind die Drehachsen der Wellen der beiden ersten Klappenelemente vorzugsweise parallel zueinander angeordnet bzw. ausgerichtet. Bei dieser bevorzugten Ausführungsform weist jedes erste Klappenelement wenigstens eine an dem Kühlergrill drehbar gelagerte Welle aufweist, so dass jedes erste Klappenelement durch Verdrehen der jeweiligen Welle verschwenkbar ist. Bei dieser bevorzugten Ausführungsform ist ferner jedes erste Klappenelement durch Verdrehen der Welle bzw. seiner Welle zwischen einer Schließstellung, in welcher das Klappenelement die Luftdurchtrittsöffnung verschließt, und einer den Luftdurchtritt durch die Luftdurchtrittsöffnung freigebende Öffnungsstellung, verschwenkbar und es sind zwei erste Vorrichtungen zum Umsetzen einer Längsbewegung des ersten Betätigungselements in eine Drehbewegung jeder Welle der ersten Klappenelemente vorgesehen, so dass jedes erste Klappenelement durch Bewegen des Betätigungselements zwischen der Schließposition und der Öffnungsposition zwischen der Schließstellung und der Öffnungsstellung verschwenkbar ist. Eine der beiden ersten Vorrichtungen ist zum Umsetzen einer Längsbewegung des ersten Betätigungselements in eine Drehbewegung der Welle eines der beiden Klappenelemente vorgesehen und die andere der beiden ersten Vorrichtungen ist zum Umsetzen einer Längsbewegung des ersten Betätigungselements in eine Drehbewegung der Welle des anderen der beiden Klappenelemente vorgesehen, so dass die beiden ersten Klappenelemente gemeinsam bzw. simultan durch Bewegen des ersten Betätigungselements zwischen der Schließposition und der Öffnungsposition zwischen der Schließstellung und der Öffnungsstellung verschwenkbar sind.

Bei der erfindungsgemäßen Einrichtung können der Kühlergrill und/oder die Klappenelemente und/oder die länglichen Betätigungselemente und/oder der Grundkörper des Drehantriebs und/oder die Vorrichtungen zum Umsetzen einer Längsbewegung eines jeweiligen Betätigungselements in eine Drehbewegung einer Welle eines jeweiligen Klappenelements aus einem Kunststoffmaterial bestehen, wobei das Kunststoffmaterial vorzugsweise Polysulfon (PSU), Poly(ethersulfon) (PES), Polyetherimid (PEI), Poly(phenylensulfid) (PPS), Polyphenylensulfon (PPSU), Polyetheretherketon (PEEK), Polyetherketone (PEK), Polyamidimid (PAI), Poly-m-phenylenisophthalamid (PMI), Polyphthalamide (PPA), Polybenzimidazole (PBI), Polytetrafluorethylen (PTFE), Perfluoralkoxylalkan (PFA), Polyoxymethylen (POM), Polyamid (PA), Polyethylenterephthalat (PET), Polybutylenterephtalat (PBT), Polymethylmethacrylat (PMMA), Polystyrol (PS), Syndiotaktisches Polystyrol (sPS), Polycarbonat (PC), Styrol-Acrylnitril-Copolymer (SAN), Polyphenylenether (PPE), Ethylen-Propylen-Dien-Kautschuk (EPDM), Acrylnitril-Butadien-Styrol (ABS), Polylactat (PLA), Polyethylen (PE), Polypropylen (PP), Polyvinylchlorid (PVC) oder Mischungen der vorgenannten Materialen umfasst.

Die Erfindung betrifft auch ein Kraftfahrzeugbauteil umfassend einen Frontstoßfänger und eine erfindungsgemäße Einrichtung, wobei der Kühlergrill der Einrichtung in einer Kühlergrill-Aufnahme des Frontstoßfängers aufgenommen ist.

Der wenigstens eine Drehantrieb zum Bewegen jedes der Betätigungselemente zwischen der Schließposition und der Öffnungsposition weist die Drehantriebswelle und den mit der Drehantriebswelle drehfest verbundenen Grundkörper auf. Gemäß einer alternativen Ausführung bzw. gemäß einer alternativen Definition weist die erfindungsgemäße Einrichtung wenigstens einen Drehantrieb zum Bewegen jedes der Betätigungselemente zwischen der Schließposition und der Öffnungsposition und den Grundkörper mit der wenigstens einen ersten Führung und der wenigstens einen zweiten Führung auf, wobei der Grundkörper mit einer Drehantriebswelle des Drehantriebs drehfest verbunden ist. Bei dieser alternativen Ausführung bzw. gemäß dieser alternativen Definition kann der Drehantrieb insbesondere ein Elektromotor mit einer Antriebswelle bzw. mit einer Drehantriebswelle sein. Bei dieser alternativen Ausführung ist die Antriebswelle bzw. Drehantriebswelle des Elektromotors mit der Drehantriebswelle des Drehantriebs identisch.

Es versteht sich, dass der Drehantrieb zum Überführen der Drehantriebswelle in die erste oder die zweite oder die dritte oder die vierte oder die fünfte Drehstellung von einer Steuereinrichtung, die insbesondere eine Komponente des Bordnetzes des Kraftfahrzeugs sein kann, durch entsprechende Steuersignale ansteuerbar sein kann, wenn zwischen dem Drehantrieb und der Steuereinrichtung ein datenleitende Verbindung bzw. eine signalleitende Verbindung besteht. Hierfür kann der Drehantrieb insbesondere eingerichtet sein, nach Empfang eines digitalen Abfragesignals der Steuereinrichtung eine Information über die vorliegende Drehstellung als digitalen Wert auszugeben und diesen digitalen Wert über die datenleitende Verbindung zwischen dem Drehantrieb und der Steuereinrichtung an die Steuereinrichtung zu übertragen.

### Kurzbeschreibung der Zeichnung

Nachfolgend werden Ausführungsbeispiele der Erfindung anhand der beigefügten Zeichnung näher erläutert. In der Zeichnung zeigt
- Fig. 1A: eine sehr schematische Darstellung eines ersten Ausführungsbeispiels einer erfindungsgemäßen Einrichtung für einen Frontstoßfänger eines Kraftfahrzeugs,
- Fig. 1B: eine schematische dreidimensionale Darstellung eines Grundkörpers der Einrichtung nach Fig. 1A,
- Fig. 1C- 1F: jeweils eine schematische Darstellung der Einrichtung nach Fig. 1A, wobei die Figuren sich voneinander unterscheidende Betriebszustände zeigen, und
- Fig.2A-2D: jeweils eine schematische dreidimensionale Darstellung eines zweiten Ausführungsbeispiels einer erfindungsgemäßen Einrichtung.

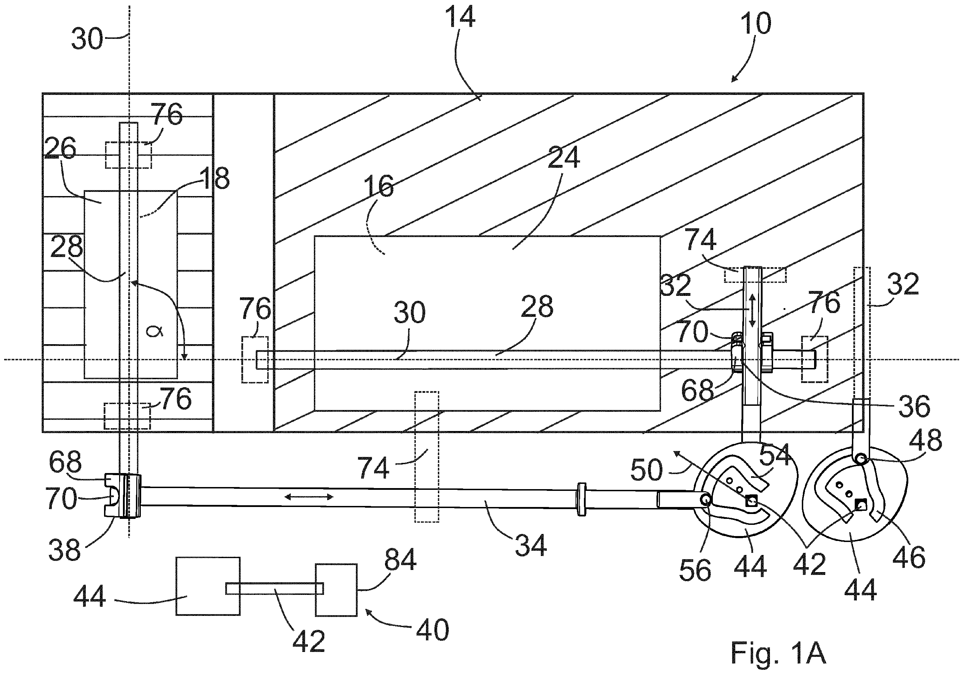

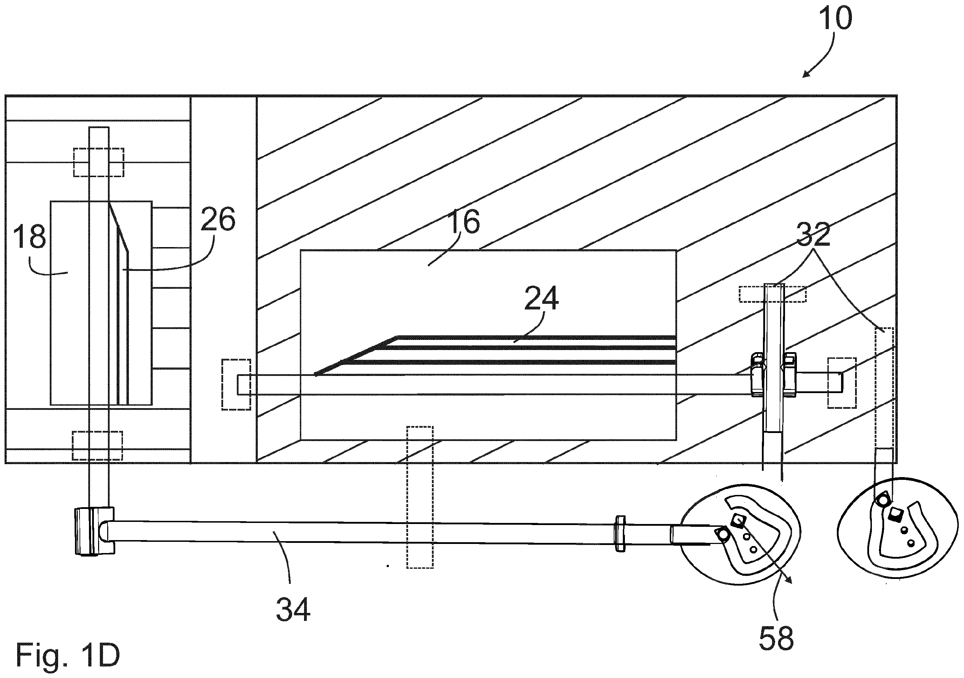

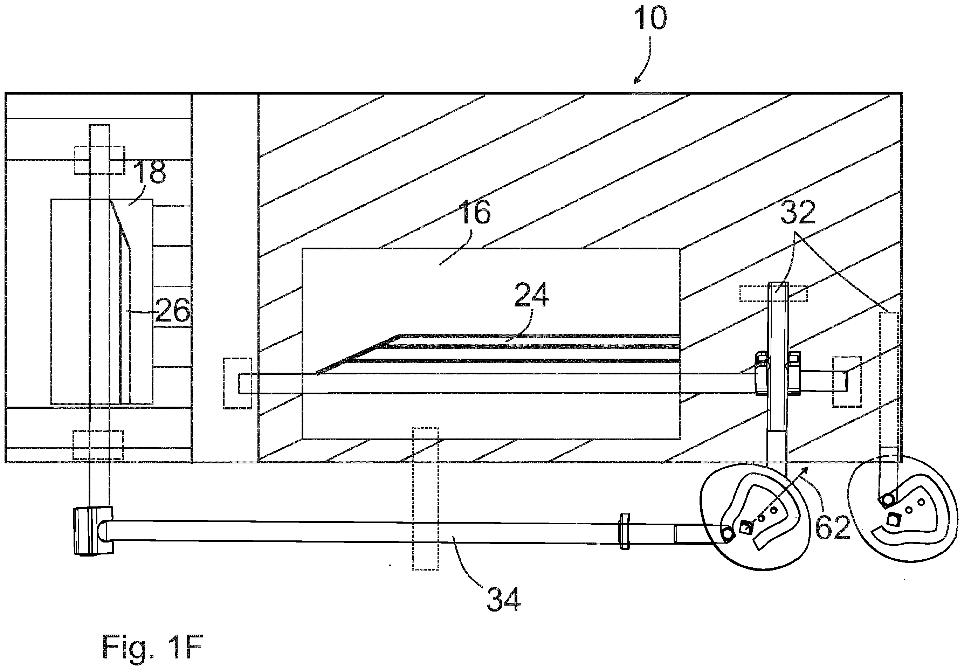

Die Einrichtung 10 nach Fig. 1A für einen Frontstoßfänger eines Kraftfahrzeugs weist einen Kühlergrill 14 mit zwei Luftdurchtrittsöffnungen 16, 18 (vgl. auch Fig. 1D) auf, wobei der Kühlergrill 14 für die Aufnahme in einer Kühlergrill-Aufnahme des Frontstoßfängers vorgesehen ist.

Die Einrichtung 10 weist ferner ein erstes Klappenelement 24 und ein zweites Klappenelement 26 auf, wobei die Luftdurchtrittsöffnung 16 von dem ersten Klappenelement 24 verschließbar ist, und wobei die Luftdurchtrittsöffnung 18 von dem zweiten Klappenelement 26 verschließbar ist.

Jedes Klappenelement 24, 26 weist eine an dem Kühlergrill 14 über zwei schematische dargestellte Lagerungsmittel 76 drehbar gelagerte Welle 28 auf, so dass das jeweilige Klappenelement 24, 26 durch Verdrehen der Welle 28 bzw. durch Verdrehen seiner Welle 28 verschwenkbar ist. Jedes Klappenelement 24, 26 ist hierbei durch Verdrehen der Welle 28 zwischen einer Schließstellung (vgl. Fig. 1A), in welcher das Klappenelement 24, 26 die Luftdurchtrittsöffnung 16, 18 bzw. die jeweilige Luftdurchtrittsöffnung 16, 18 verschließt, und einer den Luftdurchtritt durch die Luftdurchtrittsöffnung 16, 18 bzw. durch die jeweilige Luftdurchtrittsöffnung 16, 18 freigebende Öffnungsstellung (vgl. Fig. 1D) verschwenkbar.

Die Drehachse 30 der Welle 28 des ersten Klappenelements 24 schneidet die Drehachse 30 der Welle 28 des zweiten Klappenelements 26 unter dem rechtwinkeligen Winkel α.

Bei der Einrichtung 10 sind ein erstes und ein zweites längliches Betätigungselement 32, 34 vorgesehen, die jeweils zwischen einer Schließposition und einer Öffnungsposition längsbeweglich an dem Kühlergrill 14 angeordnet sind. In der Fig. 1A befinden sich beide Betätigungselemente 32, 34 in der Schließposition. Zum längsbeweglichen Anordnen ist jedes Betätigungselement 32, 34 jeweils durch ein schematisch dargestelltes Halteelement 74 an dem Kühlergrill 14 längsbeweglich gehalten.

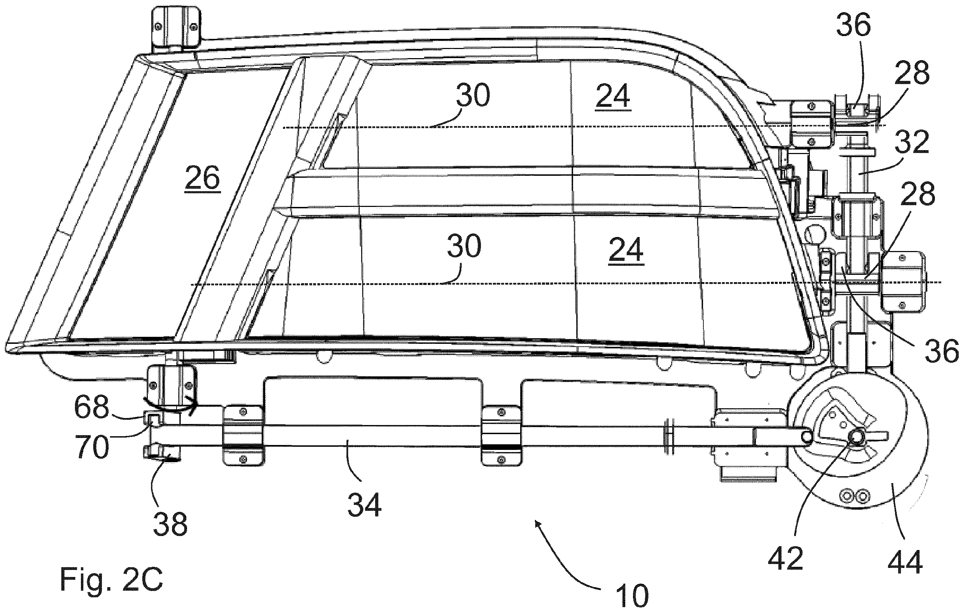

Die Einrichtung 10 weist auch eine erste Vorrichtung 36 zum Umsetzen einer Längsbewegung des ersten Betätigungselements 32 in eine Drehbewegung der Welle 28 des ersten Klappenelements 24 auf, so dass das erste Klappenelement 24 durch Bewegen des ersten Betätigungselements 32 zwischen der Schließposition und der Öffnungsposition zwischen der Schließstellung und der Öffnungsstellung verschwenkbar ist. Diese erste Vorrichtung 36 umfasst ein drehfest mit der Welle 28 verbundenes Exzenterelement 68 und ein mit dem ersten Betätigungselement 32 verbundenes Element 70 zum Verschwenken des Exzenterelements 68 durch Bewegen des ersten Betätigungselement 32 zwischen der Schließposition und der Öffnungsposition. Die Ausbildung der ersten Vorrichtung 36 ist baugleich zu der zweiten Vorrichtung 38 nach Fig. 2C und dort detaillierter dargestellt.

Die Einrichtung 10 weist ferner eine zu der ersten Vorrichtung 36 baugleiche zweite Vorrichtung 38 zum Umsetzen einer Längsbewegung des zweiten Betätigungselements 34 in eine Drehbewegung der Welle 28 des zweiten Klappenelements 26 auf, so dass das zweite Klappenelement 26 durch Bewegen des zweiten Betätigungselements 34 zwischen der Schließposition und der Öffnungsposition zwischen der Schließstellung und der Öffnungsstellung verschwenkbar ist. Die zweite Vorrichtung 38 umfasst ein drehfest mit der Welle 28 verbundenes Exzenterelement 68 und ein mit dem zweiten Betätigungselement 34 verbundenes Element 70 zum Verschwenken des Exzenterelements 68 durch Bewegen des zweiten Betätigungselement 34 zwischen der Schließposition und der Öffnungsposition.

Die Einrichtung umfasst auch einen Drehantrieb 40 (vgl. auch in der Fig. 1A die entsprechende Skizze) zum Bewegen jedes der Betätigungselemente 32, 34 zwischen der Schließposition und der Öffnungsposition, wobei der Drehantrieb 40 einen mit einer Drehantriebswelle 42 des Drehantriebs 40 drehfest verbundenen Grundkörper 44 aufweist. Der Drehantrieb 40 weist einen Elektromotor 84 auf, wobei die Drehantriebswelle 42 des Drehantriebs 40 mit der Antriebswelle 42 des Elektromotors 84 identisch ist.

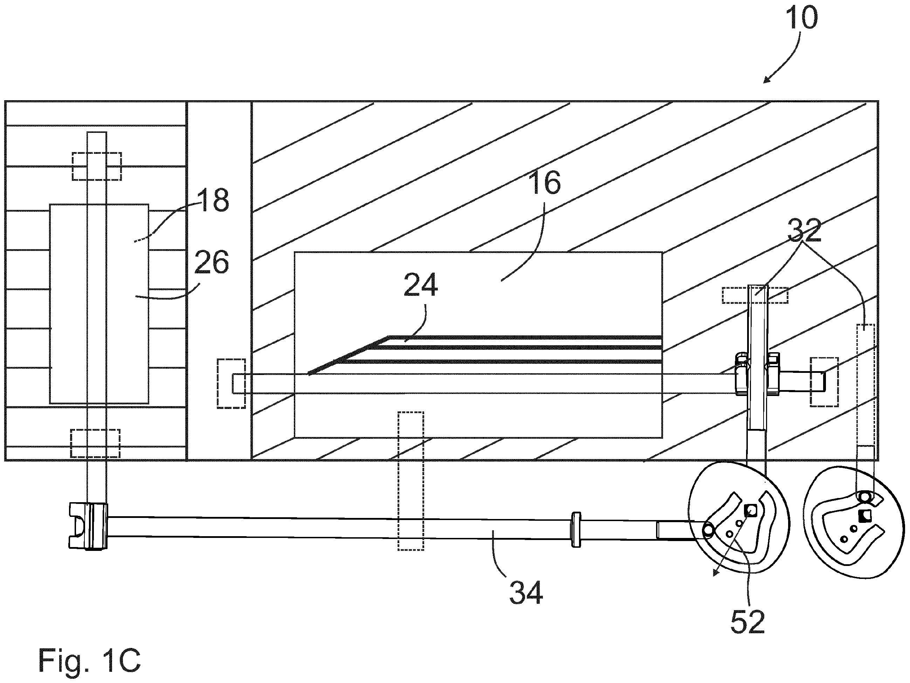

Der Grundkörper 44 (vgl. Fig. 1A) weist eine erste Führung 46 auf, in welcher ein an dem ersten Betätigungselement 32 angebrachtes erstes Führungselement 48 aufgenommen ist und der Grundkörper 44 weist eine zweite Führung 54 auf, in welcher ein an dem zweiten Betätigungselement 34 angebrachtes zweites Führungselement 56 aufgenommen ist (vgl. Fig. 1A). In der Fig. 1A und den Fig. 1C bis 1F ist die erste Führung 46 - die unter der zweiten Führung 54 angeordnet und daher nicht zu sehen ist - auch jeweils benachbart zur zweiten Führung 54 veranschaulicht um die Funktionsweise der Führungen 46, 54 des Grundkörpers 44 nachfolgend zu veranschaulichen.

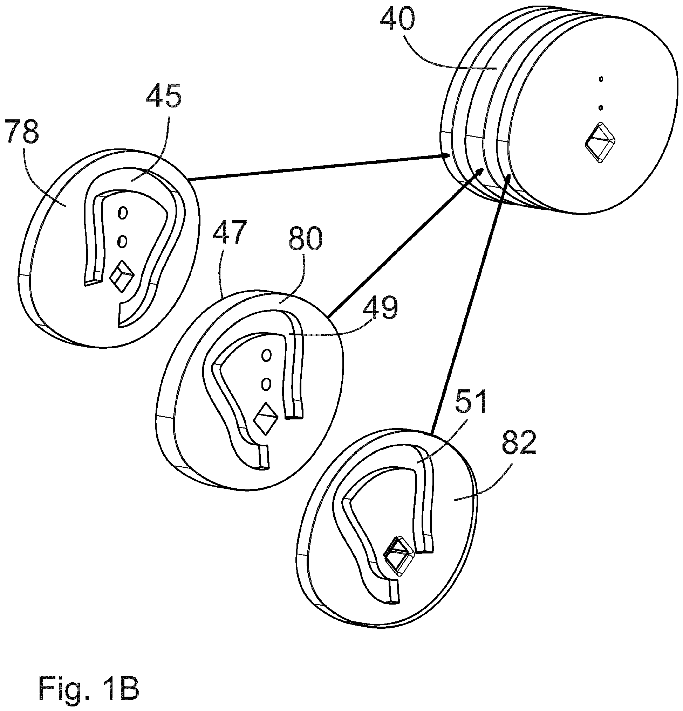

Der Grundkörper 40 ist, wie in Fig. 1B veranschaulicht, aus drei miteinander verbundenen Teilen 78, 80, 82 zusammengesetzt, wobei die Teile 78, 80, 82 im miteinander verbunden Zustand die erste und zweite Führung 46, 54 bilden bzw. ausbilden. Die erste Führung 46 ist hierbei durch eine erste Aussparung 45 oder Vertiefung 45 in dem ersten Teil und einer zu dieser deckungsgleichen Aussparung 47 oder Vertiefung 47 (nicht ersichtlich) an dem zweiten Teil 80 gebildet. Die zweite Führung 54 ist hierbei durch eine zweite Aussparung oder Vertiefung in dem dritte Teil 82 und einer zu dieser deckungsgleichen zweiten Aussparung 49 oder Vertiefung 49 an dem zweiten Teil 80.

Die erste Führung 46 setzt eine von einer ersten Drehstellung 50 der Drehantriebswelle 42 ausgehende erste Drehung der Drehantriebswelle 42 in eine zweite Drehstellung 52 in eine Bewegung des ersten Betätigungselements 32 von der Schließposition in die Öffnungsposition um (vgl. hierzu Fig. 1A und 1C), so dass sich nach dieser ersten Drehung das erste Klappenelement 24 in der Öffnungsstellung und das zweite Klappenelement 26 noch in Schließstellung befindet (vgl. hierzu Fig. 1C).

Die zweite Führung 54 setzt eine von der zweiten Drehstellung 52 ausgehende zweite Drehung der Drehantriebswelle 42, deren Drehsinn dem Drehsinn der ersten Drehung entspricht, in eine dritte Drehstellung 58 in eine Bewegung des zweiten Betätigungselements 34 von der Schließposition in die Öffnungsposition um (vgl. hierzu Fig. 1C und 1D), so dass sich nach dieser zweiten Drehung sowohl das erste Klappenelement 24 als auch das zweite Klappenelement 26 in der Öffnungsstellung befinden (vgl. hierzu Fig. 1D). Der Drehsinn der ersten Drehung entspricht hierbei in Aufsicht auf die Figuren dem Drehsinn einer Drehung entgegen des Uhrzeigersinns.

Durch Zurückdrehen der Drehantriebswelle 42 von der dritten Drehstellung 58 in die zweite Drehstellung 52 ist wieder der Zustand herstellbar, in welchem sich das erste Klappenelement 24 in der Öffnungsstellung und das zweite Klappenelement 26 in Schließstellung befindet. Durch Zurückdrehen der Drehantriebswelle 42 von der zweiten Drehstellung 52 in die erste Drehstellung 50 ist wieder der Zustand gemäß der ersten Drehstellung 50 herstellbar, in welchem sich beide Klappenelemente 24, 26 in der Schließstellung befinden.

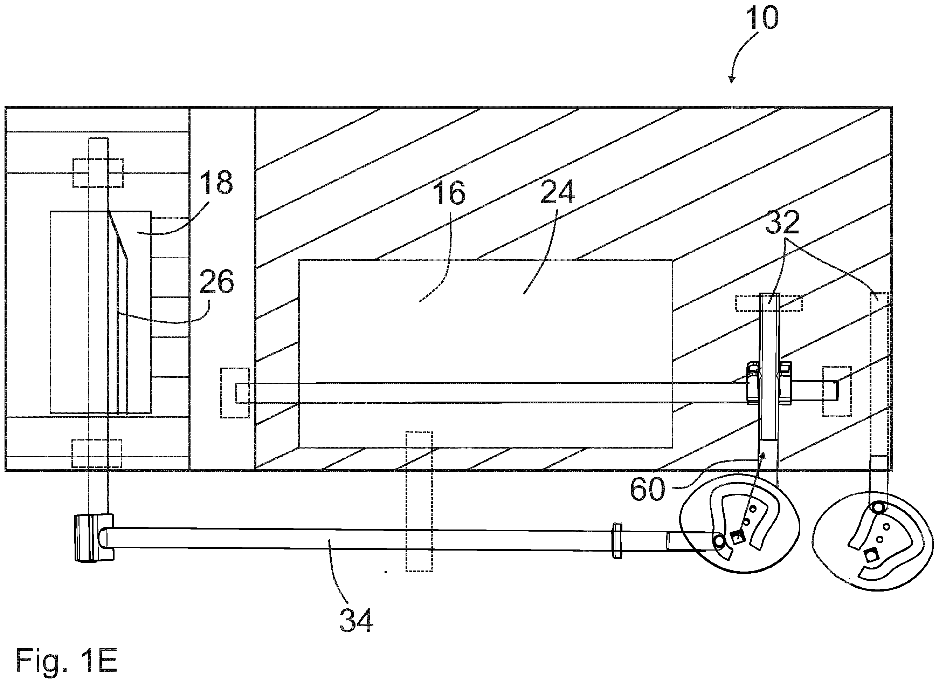

Ferner setzt die zweite Führung 54 eine von der ersten Drehstellung 50 der Drehantriebswelle 42 ausgehende dritte Drehung der Drehantriebswelle 42, deren Drehsinn dem Drehsinn der ersten Drehung entgegengesetzt ist, in eine vierte Drehstellung 60 (vgl. Fig. 1E, die den Zustand in der vierten Drehstellung veranschaulicht) in eine Bewegung des zweiten Betätigungselements 34 von der Schließposition in die Öffnungsposition um, so dass sich nach dieser dritten Drehung das zweite Klappenelement 26 in der Öffnungsstellung befindet. Das erste Klappenelement 24 befindet sich noch in der Schließstellung.

Die erste Führung 46 setzt auch eine von der vierten Drehstellung 60 der Drehantriebswelle 42 ausgehende vierte Drehung der Drehantriebswelle 42, deren Drehsinn, dem Drehsinn der dritten Drehung entspricht, in eine fünfte Drehstellung 62 in eine Bewegung des ersten Betätigungselements 32 von der Schließposition in die Öffnungsposition um, so dass sich nach dieser vierten Drehung sowohl das erste Klappenelement 24 als auch das zweite Klappenelement 26 in der Öffnungsstellung befinden.

Durch Zurückdrehen der der Drehantriebswelle 42 von der fünften 62 in die vierte Drehstellung 60 ist wieder der Zustand gemäß der vierten Drehstellung 60 herstellbarbar, in welcher sich das zweite Klappenelement 26 in der Öffnungsstellung befindet. Durch Zurückdrehen der Drehantriebswelle 42 von der vierten Drehstellung 60 in die erste Drehstellung 50 ist wieder der Zustand gemäß der ersten Drehstellung 50 herstellbar, in welchem sich beide Klappenelemente 24, 26 in der Schließstellung befinden.

Je nach Drehrichtung bzw. Drehsinn der Drehantriebswelle 42 bzw. des Drehantriebs 40 sich die Klappenelemente 24, 26 jeweils in zeitlicher Abfolge unterschiedlich nacheinander zu öffnen. Also in der ersten Drehrichtung zuerst das erste Klappenelement 24 und dann erst das zweite Klappenelement 26 und in der entgegengesetzten Drehrichtung zuerst das zweite Klappenelement 26 und dann erst das erste Klappenelement 24. Über einen einzigen Drehantrieb 40 kann also sehr einfach entweder das erste Klappenelement 24 oder das zweite Klappenelement 26 zuerst oder nur geöffnet werden.

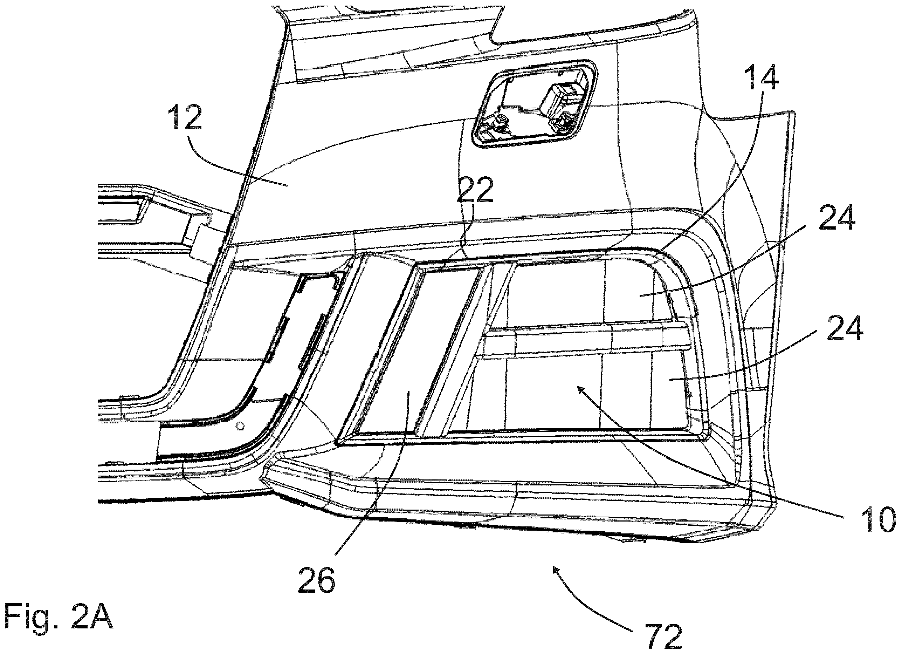

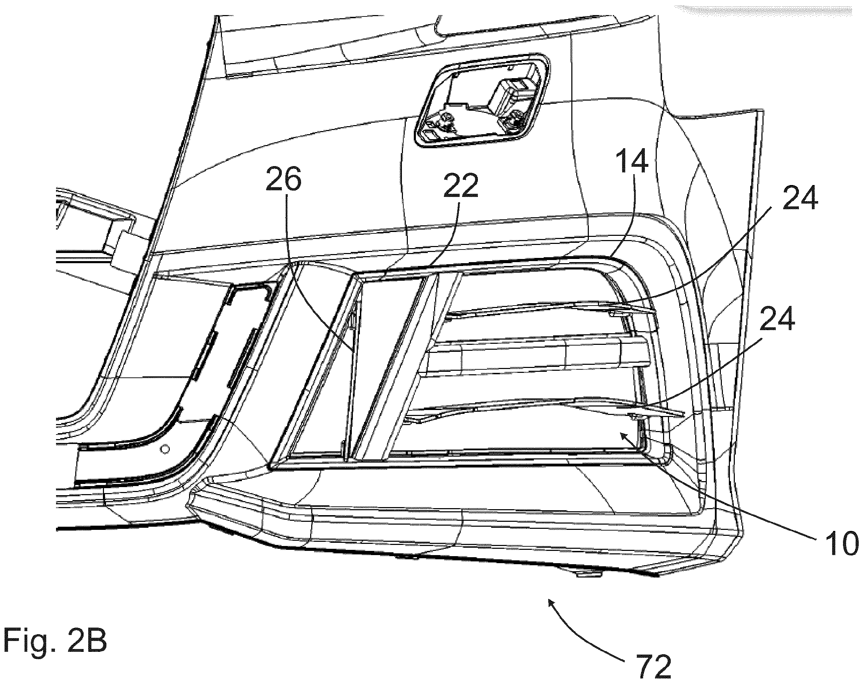

Die Einrichtung 10 nach den Fig. 2A bis 2D unterscheidet sich von dem ersten Ausführungsbeispiel nach Fig. 1A im wesentlichen dadurch, dass hier - anstatt eines - zwei erste Klappenelemente 24 vorgesehen sind. Im Einzelnen zeigt hierbei die Fig. 2A eine Vorderansicht der Einrichtung 10 mit den beiden Klappenelementen 24 und dem einen Klappenelement 26, wobei die Fig. 2A den Zustand zeigt, in welchem sich alle Klappenelementen 24, 26 im geschlossenen Zustand, also in Schließstellungbefinden. Die Fig. 2A zeigt - wie auch die Fig. 2B - nicht nur die erfindungsgemäße Einrichtung 10, sondern auch einen Teilbereich eines Frontstoßfängers 12, wobei der Kühlergrill 14 der Einrichtung 10 in einer Kühlergrill-Aufnahme 22 des Frontstoßfängers 12 aufgenommen ist. Die erfindungsgemäße Einrichtung 10 und der Frontstoßfänger 12 bilden zusammen das Kraftfahrzeugbauteil 72. Die Fig. 2B zeigt den Zustand, in welchem sich alle Klappenelemente 24, 26 im geöffneten Zustand befinden, und zwar nach entsprechenden Verdrehen der Drehantriebswelle 42 in die dritte oder fünfte Drehstellung.

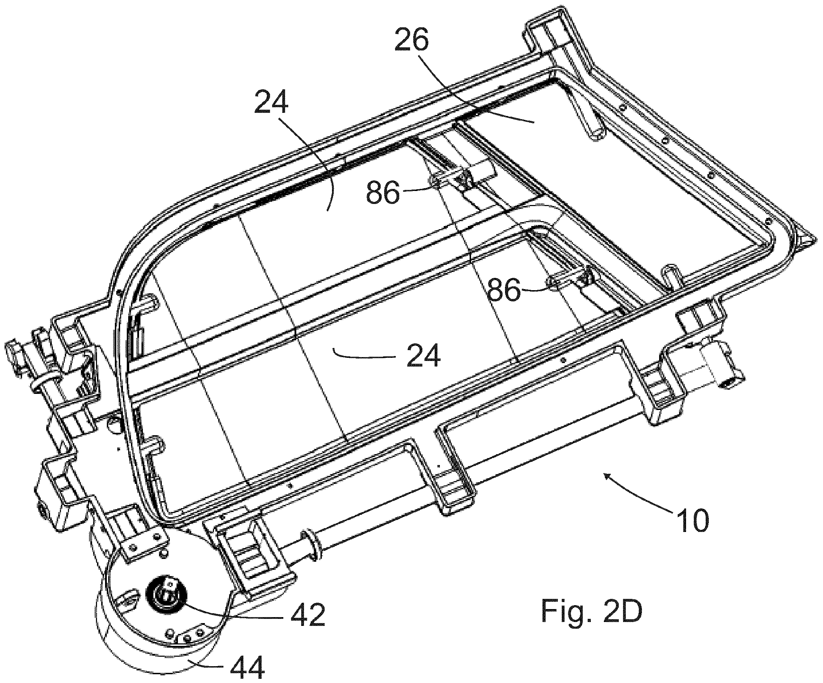

Die Fig. 2C zeigt eine Vorderansicht der Einrichtung 10 gemäß dem zweiten Ausführungsbeispiel. Die Fig. 2D zeigt eine Rückansicht der Einrichtung 10 gemäß dem zweiten Ausführungsbeispiel. In den Fig. 2C bis 2D sind bei dem Drehantrieb 40 nur der Grundkörper 44 und die Drehantriebswelle 42 gezeigt.

Bei der Einrichtung 10 nach den Fig. 2A bis 2D sind die beiden ersten Klappenelemente 24 zur Steuerung der Fahrtwindkühlung von Radläufen des Kraftfahrzeugs vorgesehen. Das zweite Klappenelement 26 ist zur Steuerung der Fahrtwindkühlung von Bremsscheiben des Kraftfahrzeugs vorgesehen. Die Drehachsen 30 der Wellen 28 der beiden ersten Klappenelemente 24 sind parallel zueinander angeordnet bzw. ausgerichtet und jedes Klappenelement 24 weist eine Welle 28 und ein Achsenelement 86 auf, die an dem Kühlergrill 24 drehbar gelagert sind. Es sind zwei erste Vorrichtungen 36 vorgesehen, wobei eine dieser ersten Vorrichtungen 36 zum Umsetzen einer Längsbewegung des ersten Betätigungselements 32 in eine Drehbewegung der Welle 28 eines ersten Klappenelements 24 vorgesehen ist, wobei die andere dieser ersten Vorrichtungen 36 zum Umsetzen einer Längsbewegung des ersten Betätigungselements 32 in eine Drehbewegung der Welle 28 des anderen ersten Klappenelements 24 vorgesehen ist, so dass die beide ersten Klappenelemente 24 gemeinsam bzw. simultan durch Bewegen des ersten Betätigungselements 32 zwischen der Schließposition und der Öffnungsposition zwischen der Schließstellung und der Öffnungsstellung verschwenkbar sind.

### Bezugszeichenliste

- 10: Einrichtung
- 12: Frontstoßfänger
- 14: Kühlergrill
- 16: Luftdurchtrittsöffnung
- 18: Luftdurchtrittsöffnung
- 22: Kühlergrill-Aufnahme
- 24: erstes Klappenelement
- 26: zweites Klappenelement
- 28: Welle
- 30: Drehachse
- 32: Betätigungselement
- 34: Betätigungselement
- 36: erste Vorrichtung
- 38: zweite Vorrichtung
- 40: Drehantrieb
- 42: Drehantriebswelle
- 44: Grundkörper
- 46: erste Führung
- 48: erstes Führungselement
- 50: erste Drehstellung
- 52: zweite Drehstellung
- 54: zweite Führung
- 56: zweites Führungselement
- 58: dritte Drehstellung
- 60: vierte Drehstellung
- 62: fünfte Drehstellung
- 68: Exzenterelement
- 72: Kraftfahrzeugbauteil
- 74: Halteelement
- 76: Lagerungsmittel
- 78: Teil
- 80: Teil
- 82: Teil
- 84: Elektromotor
- 86: Achsenelement

## Patentansprüche

1. Einrichtung (10) für einen Frontstoßfänger (12) eines Kraftfahrzeugs umfassend
einen Kühlergrill (14) mit wenigstens zwei Luftdurchtrittsöffnungen (16, 18), der für die Aufnahme in einer Kühlergrill-Aufnahme (22) des Frontstoßfängers (12) vorgesehen ist,
wenigstens ein erstes Klappenelement (24) und wenigstens ein zweites Klappenelement (26), wobei jede Luftdurchtrittsöffnung (16, 18) von jeweils einem der Klappenelemente (24, 26) verschließbar ist,
wobei jedes Klappenelement (24, 26) wenigstens eine an dem Kühlergrill (14) drehbar gelagerte Welle (28) aufweist, so dass das Klappenelement (24, 26) durch Verdrehen der Welle (28) verschwenkbar ist, wobei jedes Klappenelement (24, 26) durch Verdrehen der Welle (28) zwischen einer Schließstellung, in welcher das Klappenelement (24, 26) die Luftdurchtrittsöffnung (16, 18) verschließt, und einer den Luftdurchtritt durch die Luftdurchtrittsöffnung (16, 18) freigebende Öffnungsstellung verschwenkbar ist,
wobei die Drehachse (30) der Welle (28) des ersten Klappenelements (24) die Drehachse (30) der Welle (28) zweiten Klappenelements (26) unter einem Winkel (α) schneidet oder windschief zu dieser angeordnet ist,
wobei ein erstes und ein zweites längliches Betätigungselement (32, 34) vorgesehen sind, die jeweils zwischen einer Schließposition und einer Öffnungsposition längsbeweglich an dem Kühlergrill (14) angeordnet sind,
wobei wenigstens eine erste Vorrichtung (36) zum Umsetzen einer Längsbewegung des ersten Betätigungselements (32) in eine Drehbewegung der Welle (28) des ersten Klappenelements (24) vorgesehen ist, so dass das erste Klappenelement (24) durch Bewegen des ersten Betätigungselements (32) zwischen der Schließposition und der Öffnungsposition zwischen der Schließstellung und der Öffnungsstellung verschwenkbar ist,
wobei wenigstens eine zweite Vorrichtung (38) zum Umsetzen einer Längsbewegung des zweiten Betätigungselements (34) in eine Drehbewegung der Welle (28) des zweiten Klappenelements (26) vorgesehen ist, so dass das zweite Klappenelement (26) durch Bewegen des zweiten Betätigungselements (34) zwischen der Schließposition und der Öffnungsposition zwischen der Schließstellung und der Öffnungsstellung verschwenkbar ist,
wenigstens einen Drehantrieb (40) zum Bewegen jedes der Betätigungselemente (32, 34) zwischen der Schließposition und der Öffnungsposition, wobei der Drehantrieb (40) einen mit einer Drehantriebswelle (42) des Drehantriebs (40) drehfest verbundenen Grundkörper (44) aufweist,
wobei der Grundkörper (44) wenigstens eine erste Führung (46) aufweist, in welcher ein an dem ersten Betätigungselement (32) angebrachtes erstes Führungselement (48) aufgenommen ist, wobei die erste Führung (46) eine von einer ersten Drehstellung (50) der Drehantriebswelle (42) ausgehende erste Drehung der Drehantriebswelle (42) in eine zweite Drehstellung (52) in eine Bewegung des ersten Betätigungselements (32) von der Schließposition in die Öffnungsposition umsetzt,
wobei der Grundkörper wenigstens eine zweite Führung (54) aufweist, in welcher ein an dem zweiten Betätigungselement (34) angebrachtes zweites Führungselement (56) aufgenommen ist, wobei die zweite Führung (54) eine von der zweiten Drehstellung (52) ausgehende zweite Drehung der Drehantriebswelle (42), deren Drehsinn dem Drehsinn der ersten Drehung entspricht, in eine dritte Drehstellung (58) in eine Bewegung des zweiten Betätigungselements (34) von der Schließposition in die Öffnungsposition umsetzt.

2. Einrichtung (10) nach Anspruch 1, **dadurch gekennzeichnet, dass** die zweite Führung (54) eine von der ersten Drehstellung (50) der Drehantriebswelle (42) ausgehende dritte Drehung der Drehantriebswelle (42), deren Drehsinn dem Drehsinn der ersten Drehung entgegengesetzt ist, in eine vierte Drehstellung (60) in eine Bewegung des zweiten Betätigungselements (34) von der Schließposition in die Öffnungsposition umsetzt, und dass die erste Führung (46) eine von der vierten Drehstellung (60) der Drehantriebswelle (42) ausgehende vierte Drehung der Drehantriebswelle (42), deren Drehsinn, dem Drehsinn der dritten Drehung entspricht, in eine fünfte Drehstellung (62) in eine Bewegung des ersten Betätigungselements (32) von der Schließposition in die Öffnungsposition umsetzt.

3. Einrichtung (10) nach Anspruch 1 oder 2, **dadurch gekennzeichnet, dass** die erste Vorrichtung (36) zum Umsetzen der Längsbewegung des ersten Betätigungselements (32) in eine Drehbewegung der Welle (28) des ersten Klappenelements (24) ein an der Welle (28) angebrachtes Exzenterelement (68) und ein an dem ersten Betätigungselement (32) angebrachtes Element (70) zum Verschwenken des Exzenterelements (68) durch Bewegen des ersten Betätigungselements (32) zwischen der Schließposition und der Öffnungsposition umfasst.

4. Einrichtung (10) nach einem der vorangehenden Ansprüche, **dadurch gekennzeichnet, dass** die zweite Vorrichtung (38) zum Umsetzen der Längsbewegung des zweiten Betätigungselements (34) in eine Drehbewegung der Welle (28) des zweiten Klappenelements (26) ein an der Welle (28) angebrachtes Exzenterelement (68) und ein an dem zweiten Betätigungselement (34) angebrachtes Element (70) zum Verschwenken des Exzenterelements (68) durch Bewegen des zweiten Betätigungselement (34) zwischen der Schließposition und der Öffnungsposition umfasst.

5. Einrichtung (10) nach einem der vorangehenden Ansprüche, **dadurch gekennzeichnet, dass** zwei erste Klappenelemente (24) und ein zweites Klappenelement (26) vorgesehen sind.

6. Kraftfahrzeugbauteil (72) umfassend einen Frontstoßfänger (12) und eine Einrichtung (10) nach einem der Ansprüche 1 bis 5, wobei der Kühlergrill (14) der Einrichtung (10) in einer Kühlergrill-Aufnahme (70) des Frontstoßfängers (12) aufgenommen ist.
